# EUROPEAN PATENT APPLICATION

(11) **EP 4 604 283 A1**
(43) Date of publication of application: **20.08.2025**
(21) Application number: 24180901.1
(22) Date of filing: 07.06.2024
(51) Int. Cl.: H01M 50/147, H01M 50/627

(54) **SECONDARY BATTERY**

(30) Priority: 15.02.2024 KR 20240021563
(71) Applicant: Samsung SDI Co., Ltd., Yongin-si, Gyeonggi-do 17084 (KR)
(72) Inventor: KIM, Sun Wook, 17084 Yongin-si (KR)
(74) Representative: Marks & Clerk LLP

(57) **Abstract**

Disclosed is a secondary battery capable of preventing damage to an electrode assembly during injection of an electrolyte, wherein the secondary battery includes an electrode assembly including a first electrode plate, a second electrode plate, and a separator, a current collection plate electrically connected to the electrode assembly, a case configured to receive the electrode assembly and the current collection plate, a cap plate coupled to the top of the case, the cap plate being configured to seal the case, the cap plate including an injection hole configured to inject an electrolyte into a region, and a spray channel corresponding to the injection hole of the cap plate, the spray channel being provided therein with a through-hole, the spray channel being configured to form a flow in a direction perpendicular to an electrolyte injection direction with respect at least a part of the through-hole.

## Description

### BACKGROUND

### 1. Field

Embodiments relate to a secondary battery capable of reducing or preventing damage to an electrode assembly during injection of an electrolyte.

### 2. Description of the Related Art

A secondary battery is a battery that can be charged and discharged, unlike a primary battery, which cannot be charged after discharge. A low-capacity battery having a single battery cell packaged in the form of a pack is used in small portable electronic devices such as a cell phone and a camcorder, and a large-capacity battery including dozens of battery packs connected to each other is widely used as a power source for driving a motor of a hybrid electric vehicle.

The secondary battery may be configured to receive an electrode assembly including a positive electrode plate, a negative electrode plate, and a separator interposed therebetween in a case together with an electrolyte and coupling a cap plate to the case. An example of the electrode assembly may be a wound type electrode assembly or a stacked type electrode assembly. Electrode tabs may protrude from the top or the side of the electrode assembly, and current collection plates may be connected to the electrode tabs.

The information disclosed in this section is provided only for enhancement of understanding of the background of the disclosure and therefore it may contain information that does not form the prior art.

### SUMMARY

Embodiments provide a secondary battery capable of preventing damage to an electrode assembly during injection of an electrolyte.

A secondary battery according to an embodiment includes an electrode assembly including a first electrode plate, a second electrode plate, and a separator, a current collection plate electrically connected to the electrode assembly, a case configured to receive the electrode assembly and the current collection plate, a cap plate coupled to the top of the case, the cap plate being configured to seal the case, the cap plate comprising an injection hole configured to receive an injection of an electrolyte, and a through-hole including a spray channel, the spray channel being configured to cause the electrolyte to flow in a direction perpendicular to a direction that the electrolyte is injected into the through-hole.

The spray channel may include a projection protruding inward from an inner surface of the through-hole.

The spray channel may include a spiral projection formed on the inner surface of the through-hole.

The spray channel may be located at the lowermost end of the through-hole.

The spray channel may include a plurality of protrusions projecting inward from the inner surface of the through-hole.

The plurality of protrusions may include regions overlapping in the direction perpendicular to the electrolyte injection direction.

The protrusions may extend and project beyond the center of the spray channel in the direction perpendicular to the direction the electrolyte is injected into the through-hole.

The spray channel may be provided in an electrolyte injection port coupled to the injection hole, and the electrolyte injection port may include a first region configured to surround the top of the injection hole of the cap plate, a second region located at a lower end of the first region, the second region being coupled along a circumference of the injection hole, and a third region located at a lower end of the second region, the third region being formed so as to extend in a direction toward the electrode assembly.

The diameter of the second region may be less than the diameter of the first region and the diameter of the third region.

The third region may have a diameter gradually decreasing along an axial direction downward toward the electrode assembly. The through-hole may be configured to have a funnel shape having a diameter that tapers along an axial direction from the first region to the third region. The spray channel may be located in a fourth region located at a lower end of the third region, the spray channel being coupled to a lower end of the through-hole.

The spray channel may be in fluid communication with the injection hole of the cap plate such that the spray channel is integrally formed at the cap plate.

According to another embodiment, an electrolyte injection port for a secondary battery is provided. The electrolyte injection port includes a first region configured to surround a top of an injection hole of the secondary battery, a second region located at a lower end of the first region, the second region configured to be coupled along a circumference of the injection hole, a third region located at a lower end of the second region, the third region being configured to extend in a direction toward an electrode assembly of the secondary battery; and a through-hole spanning the first region to the third region, the through-hole being configured to receive an electrolyte.

According another embodiment, an electrolyte injection port is provided for a secondary battery. The electrolyte injection port includes a through-hole including a spray channel, the spray channel being configured to cause an electrolyte to flow in a direction perpendicular to an axis of the through-hole such that the electrolyte is sprayed into the secondary battery.

At least some of the above and other features of the invention are set out in the claims.

### BRIEF DESCRIPTION OF THE DRAWINGS

The accompanying drawings, which are incorporated in this specification, illustrate some embodiments and serve to further illustrate the technical ideas of the disclosure in conjunction with the detailed description of embodiments that follows, and the disclosure is not to be construed as limited to what is shown in such drawings.
FIG. 1 is a perspective view showing a secondary battery according to an embodiment.
FIG. 2 is a sectional view showing the secondary battery according to the embodiment.
FIG. 3 is an exploded perspective view showing a part of the secondary battery according to the embodiment.
FIG. 4 is an enlarged view of part A of FIG. 2.
FIG. 5 is a perspective view showing an electrolyte injection port of the secondary battery according to the embodiment.
FIG. 6 is a bottom perspective view showing the electrolyte injection port of the secondary battery according to the embodiment.
FIG. 7 is a sectional view showing the electrolyte injection port of the secondary battery according to the embodiment.
FIG. 8 is a sectional view showing an electrolyte injection port of a secondary battery according to another embodiment.
FIG. 9 is a sectional view showing an electrolyte injection port of a secondary battery according to a further embodiment.

### DETAILED DESCRIPTION OF EXEMPLARY EMBODIMENTS

Hereinafter, embodiments will be described in detail with reference to the accompanying drawings.

Embodiments are provided to more fully illustrate the disclosure to a person having ordinary skill in the art, the following embodiments may be modified in various other forms, and the scope of the disclosure is not limited to the following embodiments. The embodiments are provided to make the disclosure more faithful and complete and to completely convey the idea of the disclosure fully to those skilled in the art.

In the following drawings, the thickness or size of each layer is exaggerated for convenience and clarity of description and the same reference symbols in the drawings refer to the same elements. As used herein, the term "and/or" may include any one of the enumerated items and any combination of one or more thereof. As used herein, the term "connected" refers not only to direct connection between members A and B but also to indirect connection between members A and B with member C interposed therebetween.

The terms used in the specification are intended to describe specific embodiments and are not intended to limit the disclosure. As used herein, singular forms may include plural forms, unless the context clearly indicates otherwise. As used herein, the terms "comprise" (or "include") and/or "comprising" (or "including") are intended to specify the presence of stated figures, numbers, steps, operations, members, elements, and/or groups thereof and do not exclude the presence or addition of one or more other figures, numbers, steps, operations, members, elements, and/or groups.

While terms such as first and second are used herein to describe various members, parts, regions, layers, and/or portions, the members, the parts, the regions, the layers, and/or the portions are not to be limited by the terms. The terms are used only to distinguish one member, one part, one region, one layer, or one portion from another member, another part, another region, another layer, or another portion. Thus, a first member, a first part, a first region, a first layer, or a first portion hereinafter described may refer to a second member, a second part, a second region, a second layer, or a second portion without departing from the teachings of the disclosure.

Terms related to space, such as "beneath," "below," "lower," "above," and "upper," may be utilized to facilitate understanding of one element or feature shown in the drawings as different from another element or feature. The terms related to space are intended to facilitate understanding of the disclosure in various states of process or use and are not intended to limit the disclosure. For example, if an element or feature in a figure is inverted, an element or feature described as "beneath" or "below" becomes "above" or "upper." Thus, "beneath" is a concept that encompasses "above" or "below".

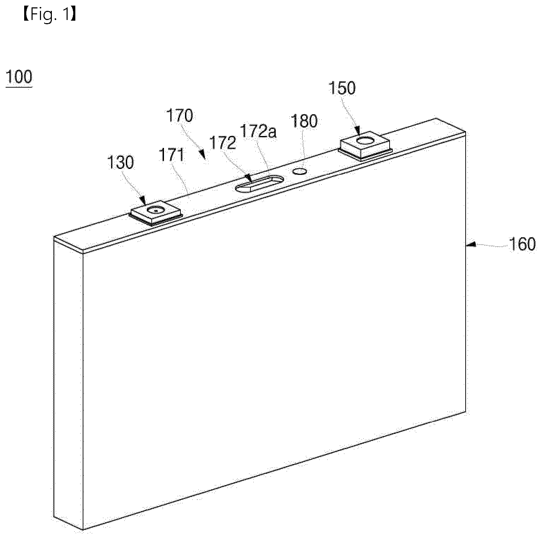

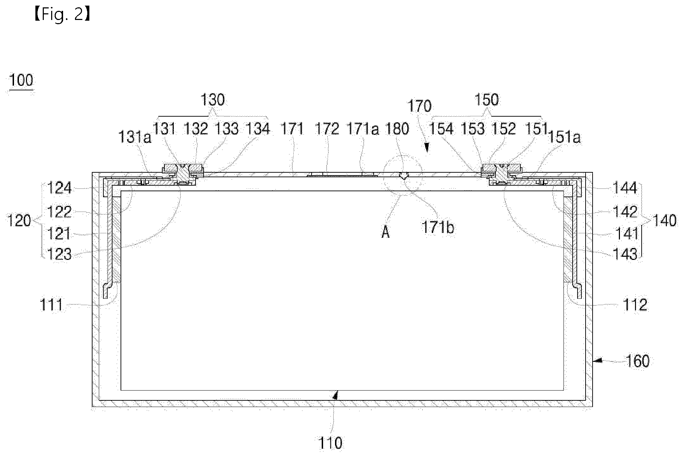

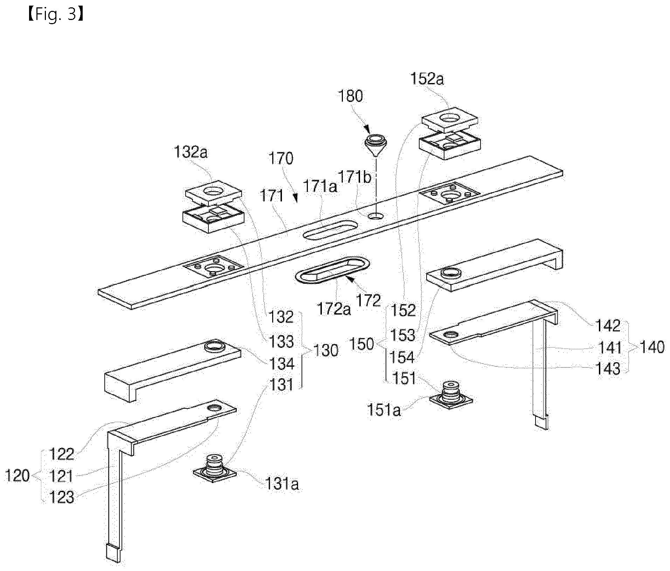

FIG. 1 is a perspective view showing a secondary battery according to an embodiment. FIG. 2 is a sectional view showing the secondary battery according to the embodiment. FIG. 3 is an exploded perspective view showing a part of the secondary battery according to the embodiment.

Referring to FIGs. 1 to 3, the secondary battery 100 according to the embodiment may include an electrode assembly 110, a first current collection plate 120, a first terminal 130, a second current collection plate 140, a second terminal 150, a case 160, a cap assembly 170, and an electrolyte injection port 180.

The electrode assembly 110 may be formed by stacking a plurality of laminates, each including a first electrode plate, a separator, and a second electrode plate. Each laminate may be formed as a thin plate or a membrane, or by winding such a laminate. The first electrode plate may operate as a negative electrode, and the second electrode plate may operate as a positive electrode.

The first electrode plate may be formed by applying a first electrode active material, such as a graphite or carbon, to a first electrode current collector made of metal foil, such as copper or nickel, and the first electrode plate may include a first electrode uncoated portion, which is a region to which no electrode active material is applied. The first electrode uncoated portion may provide a passage for current flow between the first electrode plate and the outside.

The first electrode uncoated portion of the first electrode plate may have a first current collection tab 111. A plurality of first current collection tabs 111 may be provided and may be formed so as to protrude from the first electrode plate. In a stacked structure, the first current collection tabs 111 may protrude from the first electrode plate in a certain direction and may overlap each other at one side. In a wound structure, the first electrode uncoated portion may be disposed at a pre-calculated distance from the first electrode plate, and the first current collection tabs 111 may protrude from the same region after being wound and to overlap each other.

The second electrode plate may be formed by applying a second electrode active material, such as a transition metal oxide, to a second electrode current collector made of metal foil, such as aluminium, and may include a second electrode uncoated portion, which is a region to which no electrode active material is applied.

The second electrode uncoated portion of the second electrode plate may have a second current collection tab 112 corresponding to the first current collection tab 111. Consequently, the second current collection tab 112 may have a multi-tab structure in the same manner as the first current collection tab 111. The second current collection tab 112 may protrude in a direction opposite a protruding direction of the first current collection tab 111.

The separator may be located between the first and second electrode plates to prevent short circuit and to allow movement of lithium ions. The separator may be made of polyethylene, polypropylene, or a composite film of polyethylene and polypropylene.

The electrode assembly 110 may be received in the case 160 together with an electrolyte. The electrolyte may include an organic solvent, such as ethylene carbonate (EC), propylene carbonate (PC), diethyl carbonate (DEC), ethyl methyl carbonate (EMC), or dimethyl carbonate (DMC), and a lithium salt, such as LiPF₆ or LiBF₄. The electrolyte may be liquid, solid, or gel. The first current collection tab 111 may be electrically connected to the first current collection plate 120, and the second current collection tab 112 may be electrically connected to the second current collection plate 140.

The first current collection plate 120 may be electrically connected to the first current collection tab 111 of the electrode assembly 110. In some examples, the first current collection plate 120 may be electrically connected to the first current collection tab 111 by welding. The first current collection plate 120 electrically connected to the first current collection tab 111 may have a first polarity, for example, a polarity of the negative electrode.

The first current collection plate 120 may include a first electrode connection portion 121 connected to the first current collection tab 111 and a first terminal connection portion 122 bent at an upper end of the first electrode connection portion 121 and extending therefrom, the first terminal connection portion 122 being connected to the first terminal 130.

The first electrode connection portion 121 may be in contact with and coupled to the first current collection tab 111 protruding to one end of the electrode assembly 110, whereby the first electrode connection portion 121 may be electrically connected to the first electrode plate. The first electrode connection portion 121 may be located at one side of the electrode assembly 110 and may extend in a vertical direction.

The first terminal connection portion 122 may be located above the electrode assembly 110 and may extend in a horizontal direction to be parallel to a cap plate 171, a description of which will follow. The first terminal connection portion 122 may be located between the electrode assembly 110 and the cap plate 171. The first terminal connection portion 122 may be provided at one side thereof with a terminal hole 123, to which the first terminal 130 is coupled. A first fastening terminal 131 of the first terminal 130, a description of which will follow, may be inserted into and coupled to the terminal hole 123. The terminal hole 123 may be formed in a size corresponding to the size of the first fastening terminal 131 in order to receive the first fastening terminal 131.

The first terminal 130 may be electrically connected to the first current collection plate 120. The first terminal 130 may include a first fastening terminal 131 coupled to the terminal hole 123 of the first current collection plate 120, a first terminal plate 132 coupled to the first fastening terminal 131, an upper insulating member 133 interposed between the first terminal plate 132 and the cap plate 171, and a lower insulating member 134 interposed between the first fastening terminal 131 and the cap plate 171.

The first fastening terminal 131 may extend and protrude upward through the cap plate 171 by a certain length, and may be electrically connected to the first current collection plate 120 under the cap plate 171. A flange 131a may be formed at a lower part of the first fastening terminal 131, and the flange 131a may extend outward to reduce or prevent separation of the first fastening terminal 131 from the cap plate 171. A region of the first fastening terminal 131 formed at a lower part of the flange 131a may be inserted into the terminal hole 123 of the first current collection plate 120. A region of the first fastening terminal 131 formed at an upper part of the flange 131a may extend and protrude upward through the cap plate 171 by a certain length, and the first terminal plate 132 may be coupled to the extended and protruding region.

The first fastening terminal 131 may include the same material as the first terminal connection portion 122. After the first fastening terminal 131 is inserted into the terminal hole 123, therefore, the interface between the first fastening terminal 131 and the terminal hole 123 may be laser welded to fix the first fastening terminal 131 to the first current collection plate 120. Consequently, the first fastening terminal 131 may be more stably coupled to the first current collection plate 120. In some examples, the first fastening terminal 131 may include aluminium (Al).

The first terminal plate 132 may have a coupling hole 132a to which the first fastening terminal 131 is coupled. The first terminal plate 132 may include the same material as the first fastening terminal 131. The first fastening terminal 131 may be inserted into the coupling hole 132a of the first terminal plate 132 and may be riveted and laser welded. When the first fastening terminal 131 is coupled to the first terminal plate 132 by riveting and laser welding, as described above, the first fastening terminal 131 and the first terminal plate 132 may be more stably coupled to each other. In some examples, the first terminal plate 132 may include aluminium (Al).

The upper insulating member 133 may be interposed between the first terminal plate 132 and the cap plate 171 to insulate the first terminal plate 132 and the cap plate 171 from each other. The upper insulating member 133 may be coupled to the top of the cap plate 171.

The lower insulating member 134 may be interposed between the first fastening terminal 131 and the cap plate 171 to insulate the first fastening terminal 131 and the cap plate 171 from each other. The lower insulating member 134 may be coupled to the bottom of the cap plate 171. The lower insulating member 134 may be in contact or in tight contact with the upper insulating member 133. In some examples, the lower insulating member 134 may be in tight contact between the flange 131a of the first fastening terminal 131 and the cap plate 171 and between an outer surface of the first fastening terminal 131 and the cap plate 171. The first fastening terminal 131 may be electrically isolated from the cap plate 171 by the upper insulating member 133 and the lower insulating member 134.

The second current collection plate 140 may be electrically connected to the second current collection tab 112 of the electrode assembly 110. In some examples, the second current collection plate 140 may be electrically connected to the second current collection tab 112 by welding. The second current collection plate 140 electrically connected to the second current collection tab 112 may have a second polarity, for example, a polarity of the positive electrode.

The second current collection plate 140 may include a second electrode connection portion 141 connected to the second current collection tab 112 and a second terminal connection portion 142 bent at an upper end of the second electrode connection portion 141 and extending therefrom, the second terminal connection portion 142 being connected to the second terminal 150.

The second electrode connection portion 141 may be in contact with and coupled to the second current collection tab 112 protruding to the other end of the electrode assembly 110, whereby the second electrode connection portion 141 may be electrically connected to the second electrode plate. The second electrode connection portion 141 may be located at the other side of the electrode assembly 110 and may extend in the vertical direction.

The second terminal connection portion 142 may be located above the electrode assembly 110 and may extend in the horizontal direction to be parallel to the cap plate 171, a description of which will follow. The second terminal connection portion 142 may be located between the electrode assembly 110 and the cap plate 171. The second terminal connection portion 142 may be provided at one side thereof with a terminal hole 143, to which the second terminal 150 is coupled. A first fastening terminal 151 of the second terminal 150, a description of which will follow, may be inserted into and coupled to the terminal hole 143. The terminal hole 143 may be formed in a size corresponding to the size of the first fastening terminal 151 in order to receive the first fastening terminal 151.

The second current collection plate 140 may be made of a single metal. The second electrode connection portion 141 and the second terminal connection portion 142 may be made of the same metal. The second current collection plate 140 may include the same material as the second current collection tab 112 and the second terminal 150. For example, the second current collection plate 140 may include aluminium (Al) .

The second terminal 150 may be electrically connected to the second current collection plate 140. The second terminal 150 may include a second fastening terminal 151 coupled to the terminal hole 143 of the second current collection plate 140, a second terminal plate 152 coupled to the second fastening terminal 151, an upper insulating member 153 interposed between the second terminal plate 152 and the cap plate 171, and a lower insulating member 154 interposed between the second fastening terminal 151 and the cap plate 171.

The second fastening terminal 151 may extend and protrude upward through the cap plate 171 by a certain length and may be electrically connected to the second current collection plate 140 under the cap plate 171. A flange 151a may be formed at a lower part of the second fastening terminal 151, and the flange 151a may extend outward to reduce or prevent the second fastening terminal 151 from being separated from the cap plate 171. A region of the second fastening terminal 151 formed at a lower part of the flange 151a may be inserted into the terminal hole 143 of the second current collection plate 140. A region of the second fastening terminal 151 formed at an upper part of the flange 151a may extend and protrude upward through the cap plate 171 by a certain length, and the second terminal plate 152 may be coupled to the extended and protruding region.

The second terminal plate 152 may have a coupling hole 152a to which the second fastening terminal 151 is coupled. The second fastening terminal 151 may be inserted into the coupling hole 152a of the second terminal plate 152 and may be riveted and laser welded. When the second fastening terminal 151 is coupled to the second terminal plate 152 by riveting and laser welding, as described above, the second fastening terminal 151 and the second terminal plate 152 may be more stably coupled to each other.

The upper insulating member 153 may be interposed between the second terminal plate 152 and the cap plate 171 to insulate the second terminal plate 152 and the cap plate 171 from each other. The upper insulating member 153 may be coupled to the top of the cap plate 171.

The lower insulating member 154 may be interposed between the second fastening terminal 151 and the cap plate 171 to insulate the second fastening terminal 151 and the cap plate 171 from each other. The second fastening terminal 151 may be electrically isolated from the cap plate 171 by the upper insulating member 153 and the lower insulating member 154.

The case 160 may be made of a conductive metal, such as aluminium, an aluminium alloy, or nickel-plated steel, and may be configured in a hexahedral shape having an opening configured to allow the electrode assembly 110, the first current collection plate 120, and the second current collection plate 140 to be inserted and seated therethrough. The case 160 may include a receiving space configured to receive the electrode assembly 110, the first current collection plate 120, and the second current collection 140. An inner surface of the case 160 may be insulated, whereby the case 160 may be insulated from the electrode assembly 110, the first current collection plate 120, and the second current collection 140.

The cap assembly 170 may be coupled to the top of the case 160 to seal the case 160. The cap assembly 170 may include a cap plate 171 and a safety vent 172.

The cap plate 171 may seal an upper opening of the case 160. The cap plate 171 may include the same material as the case 160. In some examples, the cap plate 171 may be coupled to the case 160 by laser welding. The cap plate 171 may be electrically connected to the second terminal 150 and may have the same polarity as the second terminal 150. The cap plate 171 and the case 160 may have the same polarity. For example, the cap plate 171 may have a polarity of the positive electrode.

The safety vent 172 may be installed in a vent hole 171a of the cap plate 171. The safety vent 172 may include a notch 172a configured to allow the safety vent 172 to open at a set pressure.

The electrolyte injection port 180 may be coupled to an injection hole 171b of the cap plate 171. The electrolyte injection port 180 may have a generally circular planar shape, may be coupled along an inner circumference of the injection hole 171b, and may be fixed to the injection hole 171b along a stepped structure in the vertical direction. While the electrolyte injection port 180 is shown and described as a separate configuration, the shape of the injection hole 171b of the cap plate 171 may be changed such that the injection hole 171b and the electrolyte injection port 180 are integrally formed depending on the implementation.

The electrolyte injection port 180 may have a path formed as a through-hole therein, and may be configured to reduce or prevent damage to the electrode assembly 110 located thereunder when an electrolyte is injected through the path. The through-hole formed in the electrolyte injection port 180 may be configured to provide a path for the electrolyte to flow in the horizontal direction, rather than simply falling in the vertical direction, thereby allowing the electrolyte to be injected while spreading widely. Thus, the electrolyte may be injected over as wide an area as possible, rather than concentrating on a particular part of the electrode assembly 110 located thereunder, thereby reducing or preventing damage to the electrode assembly 110 during injection. The detailed structure of the electrolyte injection port 180 will be described later.

After injection through the electrolyte injection port 180 is completed, the electrolyte injection port 180 may be sealed with a separate sealing stopper (not shown). Thus, the entire structure of the cap plate 171 may be sealed after injection, such that the electrolyte does not leak out.

Hereinafter, the structure of an electrolyte injection port according to an embodiment will be described in more detail.

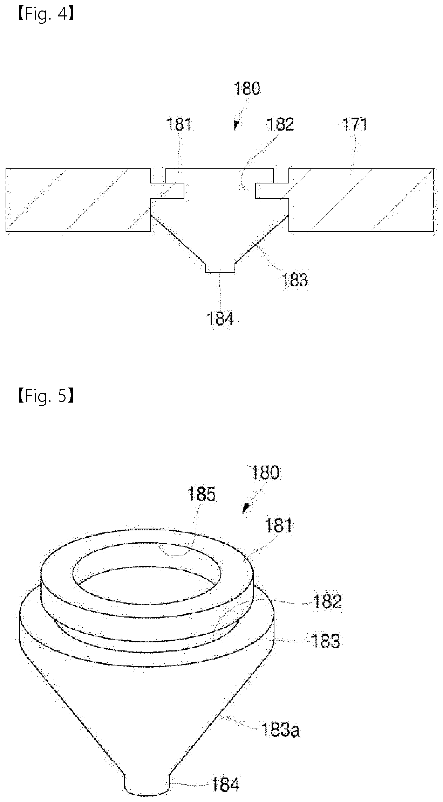

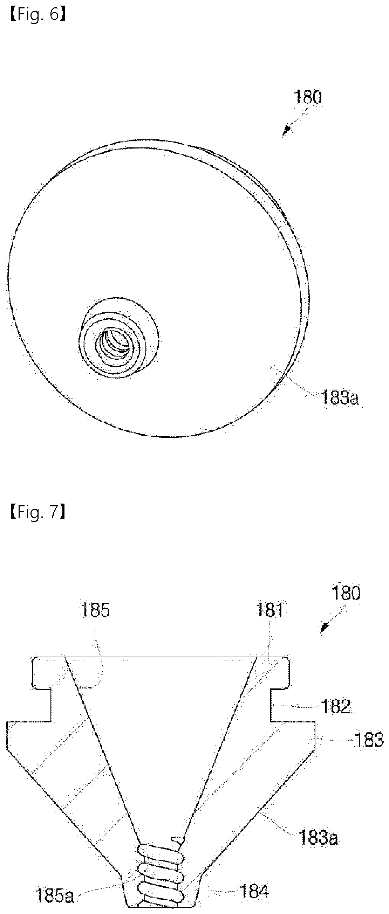

FIG. 4 is an enlarged view of part A of FIG. 2. FIG. 5 is a perspective view showing an electrolyte injection port of the secondary battery according to the embodiment. FIG. 6 is a bottom perspective view showing the electrolyte injection port of the secondary battery according to the embodiment. FIG. 7 is a sectional view showing the electrolyte injection port of the secondary battery according to the embodiment.

Referring to FIGs. 4 to 7, the electrolyte injection port 180 of the secondary battery 100 according to the embodiment may include a first region 181 located at an upper end and above the injection hole 171b of the cap plate 171, a second region 182 located under the first region 181, the second region 182 having a smaller diameter than the first region 181. The second region 182 may be coupled to an inner circumference of the injection hole 171b. The electrolyte injection port 180 may include a third region 183 located under the second region 182 and having a gradually decreasing diameter in a direction toward the electrode assembly 110, and a fourth region 184 coupled to a lower end of the third region 183 and configured to allow the electrolyte to be discharged therethrough.

The first region 181 may have a larger diameter than the injection hole 171b of the cap plate 171. Thus, the first region 181 may cover the injection hole 171b when located above the injection hole 171b.

The second region 182 may be connected to the first region 181, may be located thereunder, and may have a smaller diameter than the first region 181. The diameter of the second region 182 may correspond to the inner diameter of the injection hole 171b, whereby the second region 182 may be engaged with the injection hole 171b. When the injection hole 171b is fastened to the second region 182, the injection hole 171b may be prevented from being separated from the first region 181, thereby maintaining a fastened state.

The third region 183 may be connected to a lower end of the second region 182. An upper end of the third region 183 may have a larger diameter than the second region 182. Thus, the third region 183 may prevent the second region 182 from being separated from the injection hole 171b along with the first region 181. While an outer surface 183a of the third region 183 is shown as having a diameter gradually decreasing from the upper end in a direction toward the electrode assembly 110, the third region 183 may have the same diameter from the upper end to the lower end thereof.

The fourth region 184 may be coupled to the lower end of the third region 183. The fourth region 184 may constitute the lowermost end of the electrolyte injection port 180, and electrolyte having passed through the fourth region 184 may be applied to the electrode assembly 110 thereunder.

The through-hole 185 may extend from the first region 181 to the fourth region 184 of the electrolyte injection port 180 in the vertical direction.

The through-hole 185 may be configured to have a structure in which the diameter of the through-hole is large at the top and gradually decreases toward the lower end thereof, for example, a roughly funnel-shaped structure. The electrolyte applied to the top may be collected in the center along the funnel shape.

The through-hole 185 may further include a spray channel 185a configured to spread the electrolyte widely at the lowermost end thereof. The spray channel 185a may be configured as a spiral channel, for example, as shown in FIG. 7. The spray channel 185a may be defined as a spiral protrusion projecting inward from the inner surface of the through-hole 185. The spray channel 185a may generate flow in a direction perpendicular to a direction toward the electrode assembly 110, which is an electrolyte injection direction, for example, in a horizontal direction parallel to the cap plate 170.

The electrolyte collected through the funnel shape of the through-hole 185 may obtain centrifugal force in addition to the basic gravitational force as the electrolyte passes through the spiral channel of the spray channel 185a. The centrifugal force may allow the electrolyte to be widely dispersed, thereby preventing the electrolyte from being concentrated in a particular area of the electrode assembly 110 thereunder. The electrolyte tends to be concentrated in the region of the electrode assembly 110 located directly under the through-hole 185, but the electrolyte may be spread through the spray channel 185a constituting the spiral channel under the through-hole 185, whereby the electrolyte may be uniformly sprayed over a large region of the electrode assembly 110. In the secondary battery 100 according to the embodiment, damage to the electrode assembly 110 may be reduced or prevented during an injection process.

Hereinafter, the structure of an electrolyte injection port according to another embodiment will be described in more detail.

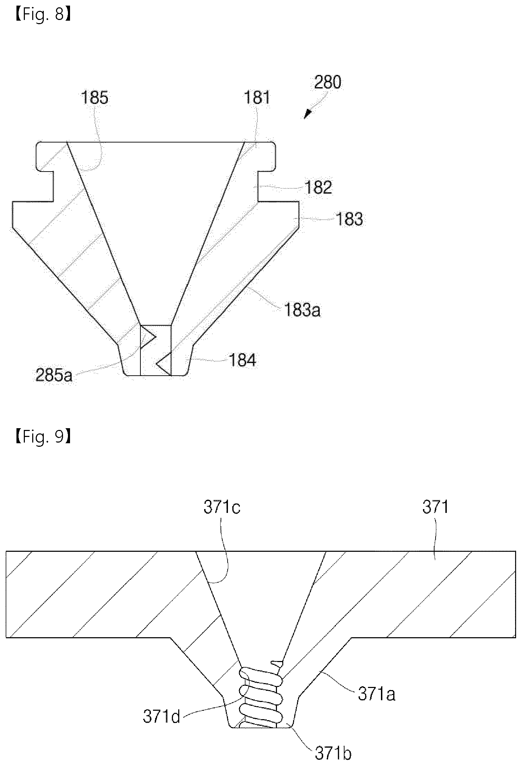

FIG. 8 is a sectional view showing an electrolyte injection port of a secondary battery according to another embodiment.

Referring to FIG. 8, the secondary battery according to the other embodiment may include an electrolyte injection port 280. Components having the same configurations and functions as the preceding embodiment are denoted by the same reference numerals, and the following description will focus on differences from the preceding embodiment.

The electrolyte injection port 280 may include a first region 181, a second region 182, a third region 183, and a fourth region 184, as in the previous embodiment.

A through-hole 185 may be formed through the first region 181 to the fourth region 184. A spray channel 285a may be formed in an end of the through-hole 185. The spray channel 285a may be formed in the shape of a protrusion projecting inward. In FIG. 8, as an example, two protrusions of a triangular horn are shown as projecting toward the inward side of the channel, but the shape and number of protrusions may be varied.

The spray channel 285a may allow the electrolyte to flow in the horizontal direction rather than vertically falling through the protrusions. For example, if two pairs of projections protrude a certain length so as to overlap each other in the horizontal direction, the electrolyte may not directly fall downward but may flow along the projections from side to side in FIG. 8. As a result, the electrolyte may be sprayed over an even area rather than concentrated in a specific area of the electrode assembly 110 because the electrolyte moves downward as the electrolyte flows along the spray channel 285a. Thus, the structure of the secondary cell according to the other embodiment may allow the electrolyte to be sprayed evenly through the spray channel 285a, whereby it is possible to prevent damage to the electrode assembly 110 during injection.

Hereinafter, the structure of secondary battery according to a further embodiment will be described.

FIG. 9 is a sectional view showing an electrolyte injection port of the secondary battery according to the further embodiment.

Referring to FIG. 9, in the further embodiment, an electrolyte injection port may be integrally formed so as to correspond to an injection hole of a cap plate 371. The cap plate 371 may be provided with a first region 371a and a second region 371b configured to perform an electrolyte injection operation. The first region 371a may be formed so as to have an outer surface with a diameter gradually decreasing toward the bottom, and the second region 371b may be connected to a lower end of the first region 371a.

A through-hole 371c having the function of an injection hole may be formed in the first region 371a, and a spray channel 371d connected to the through-hole 371c may be formed in a lower end of the through-hole 371c. The through-hole 371c may be formed through the cap plate 371 in the vertical direction, and may be configured to form, for example, a funnel shape with a diameter that gradually decreases toward the bottom.

The spray channel 371d located at the lowermost end of the through-hole 371c may be configured in the form of a spiral channel, as in the previous embodiments, or in the form of two pairs of protrusions projecting by a certain length so as to overlap each other in the horizontal direction, whereby the applied electrolyte may be widely spread.

As is apparent from the above description, in a secondary battery according to an embodiment, the electrolyte may be dispersed through a flow channel of an electrolyte injection port formed in an injection hole of a cap plate, whereby it is possible to reduce or prevent damage to an electrode assembly during injection.

The above is only one embodiment for implementing a secondary battery according to the disclosure, the disclosure is not limited to the above embodiment, and there is a technical scope of the disclosure to the extent that various modifications can be made by anyone having ordinary skill in the art to which the disclosure pertains without departing from the gist of the disclosure as claimed in the following claims.

## Claims

1. A secondary battery comprising:
an electrode assembly comprising a first electrode plate, a second electrode plate, and a separator;
a current collection plate electrically connected to the electrode assembly;
a case configured to receive the electrode assembly and the current collection plate;
a cap plate coupled to a top of the case, the cap plate being configured to seal the case, the cap plate comprising an injection hole configured to receive an injection of an electrolyte; and,
a through-hole including a spray channel, the spray channel being positioned at least partially within the injection hole of the cap plate, and the spray channel being configured to cause the electrolyte to flow in a direction perpendicular to a direction that the electrolyte is injected into the through-hole.

2. The secondary battery as claimed in claim 1, wherein the spray channel includes a projection protruding inward from an inner surface of the through-hole.

3. The secondary battery as claimed in claim 1, wherein the spray channel includes a spiral projection formed on an inner surface of the through-hole.

4. The secondary battery as claimed in claim 3, wherein the spray channel is located at a lowermost end of the through-hole.

5. The secondary battery as claimed in claim 1, wherein the spray channel comprises a plurality of protrusions projecting inward from an inner surface of the through-hole.

6. The secondary battery as claimed in claim 5, wherein the protrusions comprise regions overlapping in the direction perpendicular to the electrolyte injection direction, optionally wherein the protrusions extend and project beyond a center of the spray channel in the direction perpendicular to the direction the electrolyte is injected into the through-hole.

7. The secondary battery as claimed in claim 1, wherein
the spray channel is provided in an electrolyte injection port provided in the injection hole, and
the electrolyte injection port comprises:
a first region configured to surround a top of the injection hole of the cap plate;
a second region located at a lower end of the first region, the second region being coupled along a circumference of the injection hole; and
a third region located at a lower end of the second region, the third region being formed so as to extend in a direction toward the electrode assembly.

8. The secondary battery as claimed in claim 7, wherein:
(i) a diameter of the second region is less than a diameter of the first region and the diameter of the second region is less than a diameter of the third region; and/or
(ii) the third region has a diameter decreasing downward toward the electrode assembly,
the through-hole is configured to have a funnel shape that tapers from the first region to the third region, and
the spray channel is located in a fourth region located at a lower end of the third region, the spray channel being coupled to a lower end of the through-hole.

9. The secondary battery as claimed in claim 1, wherein the spray channel is integrally formed at the cap plate.

10. An electrolyte injection port for a secondary battery, the electrolyte injection port comprising:
a first region configured to surround a top of an injection hole of the secondary battery;
a second region located at a lower end of the first region, the second region configured to be coupled along a circumference of the injection hole;
a third region located at a lower end of the second region, the third region being configured to extend in a direction toward an electrode assembly of the secondary battery; and
a through-hole spanning the first region to the third region, the through-hole being configured to receive an electrolyte.

11. The electrolyte injection port as claimed in claim 10, wherein:
(i) a diameter of the second region is less than a diameter of the first region and a diameter of the third region; and/or
(ii) the third region has a diameter decreasing downward away from the second region,
the through-hole has a funnel shape, and
the through-hole includes a spray channel located in a fourth region at a lower end of the third region, the spray channel being coupled to a lower end of the through-hole.

12. An electrolyte injection port for a secondary battery, the electrolyte injection port comprising:
a through-hole including a spray channel, the spray channel being configured to cause an electrolyte to flow in a direction perpendicular to an axis of the through-hole such that the electrolyte is sprayed into the secondary battery.

13. The electrolyte injection port as claimed in claim 12, wherein:
(i) the spray channel has a projection protruding inward from an inner surface of the through-hole; or
(ii) the spray channel has a spiral projection formed on an inner surface of the through-hole.

14. The electrolyte injection port as claimed in claim 12 or claim 13, wherein the spray channel is located at a lowermost end of the through-hole.

15. The electrolyte injection port as claimed in claim 12, wherein the spray channel comprises a plurality of protrusions projecting inward from an inner surface of the through-hole, optionally wherein the protrusions comprise regions overlapping in the direction perpendicular to the axis of the through-hole.

## Amended claims

### Amended claims in accordance with Rule 137(2) EPC.

1. A secondary battery (100) comprising:
an electrode assembly (110) comprising a first electrode plate, a second electrode plate, and a separator;
a current collection plate (120) electrically connected to the electrode assembly;
a case (160) configured to receive the electrode assembly and the current collection plate;
a cap plate (171) coupled to a top of the case, the cap plate being configured to seal the case, the cap plate comprising an injection hole (171b) configured to receive an injection of an electrolyte; and,
a through-hole (185) including a spray channel, the spray channel (285a) being positioned at least partially within the injection hole of the cap plate;
wherein the spray channel comprises a plurality of protrusions projecting inward from an inner surface of the through-hole, wherein the protrusions comprise regions overlapping in the direction perpendicular to the electrolyte injection direction, the protrusions of the spay channel configured to cause the electrolyte to flow in a direction perpendicular to a direction that the electrolyte is injected into the through-hole.

2. The secondary battery as claimed in claim 1, wherein the protrusions extend and project beyond a center of the spray channel (285a) in the direction perpendicular to the direction the electrolyte is injected into the through-hole (185).

3. The secondary battery as claimed in claim 1, wherein
the spray channel (285a) is provided in an electrolyte injection port (180) provided in the injection hole (171b), and
the electrolyte injection port comprises:
a first region (181) configured to surround a top of the injection hole of the cap plate (171);
a second region (182) located at a lower end of the first region, the second region being coupled along a circumference of the injection hole; and
a third region (183) located at a lower end of the second region, the third region being formed so as to extend in a direction toward the electrode assembly (110).

4. The secondary battery as claimed in claim 3, wherein:
(i) a diameter of the second region (182) is less than a diameter of the first region (181) and the diameter of the second region is less than a diameter of the third region (183); and/or
(ii) the third region (183) has a diameter decreasing downward toward the electrode assembly (110),
the through-hole (185) is configured to have a funnel shape that tapers from the first region (181) to the third region (183), and
the spray channel (285a) is located in a fourth region (184) located at a lower end of the third region (183), the spray channel being coupled to a lower end of the through-hole.

5. The secondary battery as claimed in claim 1, wherein the spray channel (285a) is integrally formed at the cap plate (171).

6. An electrolyte injection port (180) for a secondary battery (100), the electrolyte injection port comprising:
a through-hole (185) including a spray channel (285a),
wherein the spray channel comprises a plurality of protrusions projecting inward from an inner surface of the through-hole, and
wherein the protrusions comprise regions overlapping in the direction perpendicular to the axis of the through-hole, the protrusions of the spray channel configured to cause an electrolyte to flow in a direction perpendicular to an axis of the through-hole such that the electrolyte is sprayed into the secondary battery.

7. The electrolyte injection port as claimed in claim 6, wherein the spray channel (285a) is located at a lowermost end of the through-hole (185).

8. The electrolyte injection port as claimed in claim 6, wherein the through-hole (185) is configured to have a structure in which the diameter of the through-hole is large at the top and gradually decreases toward the lower end.

9. The electrolyte injection port as claimed in claim 6, wherein the protrusions extend and project beyond a center of the spray channel (285a) in the direction perpendicular to the direction the electrolyte is injected into the through-hole (185).

10. The electrolyte injection port claimed in claim 6, wherein the electrolyte injection port comprises:
a first region (181) configured to surround a top of the injection hole of the cap plate (171);
a second region (182) located at a lower end of the first region, the second region being coupled along a circumference of the injection hole; and
a third region (183) located at a lower end of the second region, the third region being formed so as to extend in a direction toward the electrode assembly (110).

11. The electrolyte injection port as claimed in claim 10, wherein:
(i)a diameter of the second region (182) is less than a diameter of the first region (181) and the diameter of the second region is less than a diameter of the third region (183); and/or
(ii) the third region (183) has a diameter decreasing downward toward the electrode assembly (110),
the through-hole (185) is configured to have a funnel shape that tapers from the first region (181) to the third region (183), and the spray channel (285a) is located in a fourth region (184) located at a lower end of the third region (183), the spray channel being coupled to a lower end of the through-hole.
